Europäisches Patentamt

European Patent Office

Office européen des brevets

(19)

(11) Publication number: **0 656 414 A2**

# EUROPEAN PATENT APPLICATION

(12)

(21) Application number: **94117297.5**

(22) Date of filing: **02.11.94**

(51) Int. Cl.6: **C10M 135/02**, C10M 169/00, C10M 173/02, //(C10N40/04, 40:20,50:10,70:00)

(30) Priority: **03.11.93 US 148762**

(43) Date of publication of application:
**07.06.95 Bulletin 95/23**

(84) Designated Contracting States:
**DE ES FR GB NL**

(71) Applicant: **THE LUBRIZOL CORPORATION**
**29400 Lakeland Boulevard**
**Wickliffe, OH 44092 (US)**

(72) Inventor: **Sowerby, Roger L.**
**8301 Tewksbury Lane**
**Concord,**
**Ohio 44077 (US)**

(74) Representative: **Vossius, Tilman et al**
**Dr. Volker Vossius,**
**Patent- und Rechtsanwaltskanzlei,**
**Holbeinstrasse 5**
**D-81679 München (DE)**

(54) **Sulfurized fatty acid or ester and olefin mixtures, lubricants, and methods of making the same.**

(57) This invention relates to a process for preparing a sulfurized composition comprising the steps of preparing a mixture comprising (a) a fatty acid or ester, and (b) an olefin having from about 6 to about 30 carbon atoms, and reacting the mixture with sulfur and hydrogen sulfide in the presence of a catalyst and under superatmospheric pressure, wherein the mixture contains from about 10 to about 90 parts by weight of (a) and from about 10 parts to about 80 parts by weight of (b), and wherein from about 10% to about 70% of the sulfur is from hydrogen sulfide. The invention also relates to a sulfur composition comprising a hydrocarbyl sulfide, wherein from about 20% to about 90% of the hydrocarbyl groups are derived from a fatty acid or ester and from about 10% to about 80% of the hydrocarbyl groups are derived from an olefin having from about 6 to about 30 carbon atoms, wherein the hydrocarbyl sulfide contains from about 8% to about 15% sulfur, and has a neat ASTM color of less than about 4.5.

EP 0 656 414 A2

## Technical Field of the Invention

The invention relates to a sulfurized composition and method of making the same.

## Background of the Invention

In metalworking operations, the metalworking fluid is used to cool and lubricate the workpiece. It is advantageous for the lubricant to be light colored. Light colored lubricants allow easy viewing of the metalworking operation. In the past, sulfurized sperm oil was used widely as an additive in many lubricant formulations such as in gear oil, worm, and spur gears, automatic transmission fluids, waxing lubricants, and as metalworking additives. Sulfurized oils, such as sulfurized lard and soybean oil, replaced the sulfurized sperm oil and provided antiwear and lubricity properties for lubricants.

U.S. Patents 3,953,347 and 3,926,822 describe compositions of matter useful as lubricant additives which are sulfurized compositions prepared by reacting sulfur with a mixture comprising at least one fatty acid ester, at least one aliphatic olefin containing about 8 to about 36 carbon atoms and optionally, at least one fatty acid. The sulfurized compositions are prepared by heating such mixtures of fatty acid ester and fatty olefin with sulfur at temperatures of from 65°C to about 200°C. In addition to the above-described reagent, the reaction mixture may also include sulfurization promoters such as phosphorous-containing reagents such as phosphorous acid esters, and surface-active agents such as lecithin. An example of a phosphorous-acid ester given in these patents is triphenylphosphite. The preparation of synthetic sulfurized oil useful as the replacement for sulfurized sperm oil also is described in U.S. Patents 3,843,534; 3,825,495; 4,166,795; 4,166,796; 4,166,797; 4,321,153; 4,456,540; and 4,487,705. The sulfurization generally is carried out using elemental sulfur, and simultaneous sulfurization and chlorination may be effected by reacting with sulfur monochloride. Phosphosulfurization is described in these patents and may be carried out by addition of small amounts of a phosphorus sulfide to the sulfurized blend followed by heating.

Various compositions prepared by the sulfurization of organic compounds and more particularly olefins and olefin-containing compounds are known in the art, as are lubricants containing these products. Typical sulfurized compositions prepared by reacting olefins such as isobutene, diisobutene, and triisobutene with sulfur under various conditions are described in, for example, Chemical Reviews, 65, 237(1965). Other references describe the reaction of such olefins with hydrogen sulfide and elemental sulfur to form predominantly mercaptans with sulfides, disulfides and higher polysulfides also being formed as by-products. Reference is made to J. Am. Chem. Soc., 60, 2452(1938), and U.S. Patents 3,221,056, 3,419,614 and 4,191,659. U.S. Patent 3,419,614 describes a process for increasing the yield of mercaptan by carrying out the reaction of olefin with hydrogen sulfide and sulfur at a high temperature in the presence of various basic materials. U.S. Patent 4,191,659 describes the preparation of sulfurized compositions by reaction at superatmospheric pressure of olefins with a mixture of sulfur and hydrogen sulfide in the presence of a catalyst followed by treatment with an alkali metal sulfide. The use of sulfurized natural and synthetic oils as additives in lubricating compositions has been suggested in the art such as in, for example, U.S. Patents 2,299,813 and 4,360,438.

The sulfurized fatty oils generally have high ASTM color values. ASTM color is a value assigned to the color of the lubricant viewed with backlighting. The color is typically determined by diluting 2.5 % by weight of the additive with lubricant base stock. However, when the additive is particularly dark in color, such as the prior art sulfurized fatty oils, then the ASTM color is "double diluted". The additive is added to the lubricant base stock at 2.5% and then the blended lubricant is further diluted by taking 2.5% by weight of the blended lubricant and diluting that with lubricant base stock. Many commercially available sulfurized oils have double diluted ASTM colors of greater than 5. It is desirable to have and sulfurized fatty oil which is effective as an antiwear agent and has a light color.

## Summary of the Invention

This invention relates to a process for preparing a sulfurized composition comprising the steps of preparing a mixture comprising (a) a fatty acid or ester, and (b) an olefin having from about 6 to about 30 carbon atoms, and reacting the mixture with sulfur and hydrogen sulfide in the presence of a catalyst and under superatmospheric pressure, wherein the mixture contains from about 10 to about 90 parts by weight of (a) and from about 10 parts to about 80 parts by weight of (b), and wherein from about 10% to about 70% of the sulfur is from hydrogen sulfide. The invention also relates to a sulfur composition comprising a hydrocarbyl sulfide, wherein from about 20% to about 90% of the hydrocarbyl groups are derived from a fatty acid or ester and from about 10% to about 80% of the hydrocarbyl groups are derived from an olefin having from about 6 to about 30 carbon atoms, wherein the hydrocarbyl sulfide contains from about 8% to about 15% sulfur, and has a neat ASTM color of less than about 4.5.

## Description of the Preferred Embodiments

The term "hydrocarbyl" includes hydrocarbon as well as substantially hydrocarbon groups. Substantially hydrocarbon describes groups which contain heteroatom substituents that do not alter the predominantly hydrocarbon nature of the substituent. Examples of hydrocarbyl groups include the following:

(1) hydrocarbon substituents, i.e., aliphatic (e.g., alkyl or alkenyl) and alicyclic (e.g., cycloalkyl, cycloalkenyl) substituents, aromatic-, aliphatic- and alicyclic-substituted aromatic substituents and the like as well as cyclic substituents wherein the ring is completed through another portion of the molecule (that is, for example, any two indicated substituents may together form an alicyclic radical);

(2) substituted hydrocarbon substituents, i.e., those substituents containing non-hydrocarbon groups which, in the context of this invention, do not alter the predominantly hydrocarbon nature of the substituent; those skilled in the art will be aware of such groups (e.g., halo (especially chloro and fluoro), hydroxy, mercapto, nitro, nitroso, sulfoxy, etc.);

(3) heteroatom substituents, i.e., substituents which will, while having a predominantly hydrocarbon character within the context of this invention, contain an atom other than carbon present in a ring or chain otherwise composed of carbon atoms (e.g., alkoxy or alkylthio). Suitable heteroatoms will be apparent to those of ordinary skill in the art and include, for example, sulfur, oxygen, nitrogen and such substituents as, e.g., pyridyl, furyl, thienyl, imidazolyl, etc.

In general, no more than about 2, preferably no more than one, heteroatom substituent will be present for every ten carbon atoms in the hydrocarbyl group. Typically, there will be no such heteroatom substituents in the hydrocarbyl group. Therefore, the hydrocarbyl group is purely hydrocarbon.

As described above the present process involves the reaction of sulfur and hydrogen sulfide with a mixture of an unsaturated fatty acid or ester, and an olefin. Generally, the fatty acid or ester is present in the mixture in an amount from about 10 parts up to about 90 parts; or from about 45 parts up to about 80 parts, or from about 55 parts up to about 75 parts by weight of the mixture. Here, as well as elsewhere in the specification and claims, the limits for the ranges and the ratios may be combined. In one embodiment, fatty acid or ester is a fatty ester, preferably a fatty triglyceride, such as one or more of the fatty oils described below. In another embodiment, the mixture of the fatty acid or ester and the olefin contains a fatty ester and a fatty acid. In this embodiment, the fatty acid is generally, present in an amount from about 0.01 parts up to about 5 parts, or from about 0.02 parts up to about 1 parts; and the fatty ester is present in the same level as described above.

Fatty acids generally contain from about 8 to about 30, or from about 12 to about 24, or from about 12 to about 20 carbon atoms. The unsaturated fatty acids generally contained in the naturally occurring vegetable or animal fats and oils and may contain one or more double bonds. The unsaturated fatty acids include palmitoleic acid, oleic acid, linoleic acid, linolenic acid, and erucic acid. The unsaturated fatty acids may comprise mixtures of acids such as those obtained from naturally occurring animal and vegetable oils, such as lard oil, tall oil, peanut oil, soybean oil, cottonseed oil, sunflower seed oil, rapeseed oil, or wheat germ oil. Tall oil is a mixture of rosin acids, mainly abietic acid, and unsaturated fatty acids, mainly oleic and linoleic acids. Tall oil is a by-product of the sulfate process for the manufacture of wood pulp.

The unsaturated fatty acid esters include fatty oils. The fatty oils include naturally occurring triglyceride esters and synthetic esters of similar structure. Examples of naturally occurring fats and oils containing unsaturation include animal fats, such as Neat's-foot oil, lard oil, depot fat, beef tallow, etc. Examples of naturally occurring vegetable oils include cottonseed oil, corn oil, poppy-seed oil, safflower oil, sesame oil, soybean oil, sunflower seed oil, rapeseed oil and wheat germ oil. Specially grown sunflower oils containing high amounts of oleic acid (e.g., > 80% by weight or more of oleic acid) may be sulfurized in accordance with the process of this invention. Such sunflower oils are available commercially under the general trade designation TRISUN from SVO Enterprises Corporation, Wickliffe, Ohio. In one embodiment, the fatty oil is other than lard oil.

The fatty acid esters also may be prepared by reacting one or more of the above described fatty acids, such as oleic acid, linoleic acid, linolenic acid, and erucic acid, with alcohols. The alcohols generally contain from 1 up to about 40, or from 1 up to about 30, or from 1 up to about 10 carbon atoms. They may be monohydric alcohols, such as methanol, ethanol, isooctanol, dedeccnol, cyclohexanol, etc. The alcohols may also be polyhydric alcohols, such as alkylene polyols. The polyhydric alcohols generally contain from 2 up to about 40, or up to about 20 carbon atoms; and from 2 up to about 10, or up to about 6 hydroxyl groups. Polyhydric alcohols include ethylene glycols, including di-, tri- and tetraethylene glycols; propylene glycols, including di-, tri- and tetrapropylene glycols; glycerol; butanediol; hexanediol; sorbitol; arabitol; mannitol; sucrose; fructose; glucose; cyclohexane diol; erythritol; and pentaerythritols, including di- and tripentaerythritol; preferably, diethylene glycol, triethylene glycol, glycerol, sorbitol, trimethylolpropane, pentaerythritol and dipentaerythritol.

The above fatty acids or esters are reacted together with olefins with sulfur and hydrogen sulfide. The olefins are generally present in an amount from about 10 parts to about 80 parts, or from about 15 parts to about 50 parts, or from about 20 parts to about 40 parts by weight of the mixture.

The olefins generally have from about 6 to about 30, or from about 10 to about 24, or from about 14 to about 18 carbon atoms. In one embodiment, the olefins are alpha-olefins (sometimes referred to as mono-1-olefins) or isomerized alpha-olefins. Examples of the alpha-olefins include 1-octene, 1-nonene, 1-decene, 1-dodecene, 1-tridecene, 1-tetradecene, 1-pentadecene, 1-hexadecene, 1-heptadecene, 1-octadecene, 1-nonadecene, 1-eicosene, 1-henicosene, 1-docosene, 1-tetracosene, etc. Commercially available alpha-olefin fractions that can be used include the $C_{15-18}$ alpha-olefins, $C_{12-16}$ alpha-olefins, $C_{14-16}$ alpha-olefins, $C_{14-18}$ alpha-olefins, $C_{16-18}$ alpha-olefins, $C_{16-20}$ alpha-olefins, $C_{22-28}$ alpha-olefins, etc. The $C_{16}$ and $C_{16-18}$ alpha-olefins are particularly preferred.

The above fatty acid or esters and olefins are reacted with sulfur and hydrogen sulfide in the presence of a catalyst. Typically, from about 1 to about 5 equivalents of sulfur from the sulfur and the hydrogen sulfide are reacted with each equivalent of the mixture of the fatty acid or ester and an olefin. The equivalent weight of the sulfur is 16 and the equivalent of hydrogen sulfide is 17. The equivalent weight of the mixture is the combined equivalents of the fatty acid or ester and the olefin. The equivalents of the fatty acid or ester is determined by the number of double bonds in the fatty acid or ester. The equivalents are determined by Iodine value. Iodine value is determined according to ASTM D-460. The equivalents of olefin is determined by the number of double bonds present in the olefin. In another embodiment, from about 1 to about 4, or from 1.2 to about 3, or from 1.4 to about 2.5 equivalents of sulfur are reacted with each equivalent of the mixture. Typically, from about 25% up to about 80%, or from about 30% up to about 75%, or from about 45% up to about 65% by weight of the sulfur is from hydrogen sulfide.

The catalyst is generally a basic catalyst, and usually a weak base catalyst. The catalyst is generally present in an amount sufficient to catalyse the reaction between the mixture of the fatty acid or ester and the olefin with the sulfur and hydrogen sulfide. Typically, the catalyst is present in an amount from about 0.1% up to about 2%, or from about 0.3% up to about 1.5%, or from about 0.4% to about 1.2% by weight.

In one embodiment, the catalyst is ammonia, an amine, a metal dithiocarbamate, or a transition metal oxide. The amine generally contains at least one hydrocarbyl group. In one embodiment, the hydrocarbyl groups each independently contain from 1 to about 24, or from 1 to about 12, or from 1 to about 6 carbon atoms. In another embodiment, the hydrocarbyl groups are alkyl groups. In one embodiment, the alkyl groups are linear. In another embodiment, the catalyst are monoalkylamine or trialkylamine. Examples of useful amines include methylamine, ethylamine, propylamine, butylamine, amylamine, octylamine, and dodecylamine. Examples of secondary amines include dimethylamine, diethylamine, dipropylamine, dibutylamine, methylbutylamine, ethylhexylamine, etc. Tertiary amines include trimethylamine, triethylamine, tributylamine, methyldiethylamine, ethyldibutylamine, etc.

In another embodiment, the catalyst is a metal dithiocarbamate. The metal dithiocarbamate is prepared by reacting a metal compound with a dithiocarbamic acid to form a metal salt. The dithiocarbamic acid is prepared by reacting an amine with carbon disulfide. The amine may be a primary or a secondary amine. In one embodiment, the amines are those described above.

Specific examples of the metal dithiocarbamates include bismuth dimethyldithiocarbamate, calcium diethyldithiocarbamate, calcium diamyldithiocarbamate, cadmium diethyldithiocarbamate, copper dimethyldithiocarbamate, zinc diethyldithiocarbamate, zinc dibenzyldithiocarbamate, zinc dibutyldithiocarbamate, zinc diamyldithiocarbamate, zinc di(2-ethyl- hexyl)dithiocarbamate, cadmium dibutyldithiocarbamate, cadmium dioctyldithiocarbamate, cadmium octyl-butyldithiocarbamate, magnesium dibutyldithiocarbamate, magnesium dioctyldithiocarbamate, cadmium dicetyldithiocarbamate, sodium diamyldithiocarbamate, sodium diisopropyldithiocarbamate, etc.

Generally, the mixture of the fatty acid or ester and olefin is reacted with sulfur and hydrogen sulfide under superatmospheric conditions. The pressure may be supplied, such as by an inert gas, e.g. nitrogen, or the pressure may be autogenous, i.e pressure which naturally develops during the course of the reaction. The mixture of the fatty ester or acid and olefin is reacted with sulfur, and hydrogen sulfide, at a temperature up to the decomposition temperature of the reactants or reaction products. In one embodiment, the temperature of the reaction is from about 80°C up to about 250°C, or from about 100°C to about 225°C, or from about 125°C to about 200°C. Generally, the reaction mixture is maintained at reaction temperature for about 0.5 to about 20, or from about 2 to about 15, or from about 4 to about 10 hours.

The invention also relates to a sulfur composition comprising a hydrocarbyl sulfide, wherein from about 20% to about 90% of the hydrocarbyl groups are derived from a fatty acid or ester and from about 10% to about 80% of the hydrocarbyl groups are derived from an olefin having from about 6 to about 30 carbon atoms, wherein the hydrocarbyl sulfide contains from about 8% to about 15% sulfur, and has a neat ASTM color of less than about 4.5. The proportions of the hydrocarbyl groups may be the proportions of the fatty acid or ester and the olefin as described above. In one embodiment, the hydrocarbyl sulfide has from about 9% to about 13% by weight sulfur. Generally, the neat ASTM color is less than about 4.5, or less than about 3.5, or less than about 2.5. Typically, the hydrocarbyl sulfide has a 1a copper strip at 1% by weight in 100 neutral mineral oil. In one embodiment, the hydrocarbyl sulfide has a 2a or better copper strip at 5% by weight in 100 neutral mineral oil. In another embodiment, the hydrocarbyl sulfide has a 1a copper strip at 5% by weight in a 100 neutral mineral oil. The copper strip is determined by ASTM D-130. In one embodiment, the hydrocarbyl sulfide is prepared by the above described process.

The following examples relate to the process and hydrocarbyl sulfides of the present invention. In the Examples and throughout the specification and claims, unless the context indicates otherwise, parts and percentages are by weight, temperature is in degrees Celsius. Unless otherwise specified, the copper strips are determined at 1% by weight in 100 neutral mineral oil.

Example 1

A pressure reactor is charged with 118 grams of sulfur. The reaction vessel is evacuated and is charged with thethylamine (14 grams), C16-18 alpha-olefin (672 grams), Neodene® 1618 olefins (available from Shell Chemical Company), and soybean oil (1330 grams) available commercially from Central Soya Chemical Company, Inc. (having an Iodine value of 132). Hydrogen sulfide (145.2 grams) is added to the reaction vessel and the reaction mixture is heated from 40°C to 158°C over 6.5 hours. The reaction pressure reaches a maximum of 290 psig at 105°C. The reaction mixture is maintained at 151°C to about 160°C for 7 hours. The reaction mixture is cooled to 40°C. The reaction mixture is then vacuum stripped to 80°C and 10mm Hg. The residue is filtered through diatomaceous earth and the filtrate is the desired product. The product has 11.8% sulfur and a neat ASTM color of lighter than 1.5 and a 1a copper strip.

Example 2

A pressure reactor is charged with 117 grams of sulfur. The system is evacuated and charged with 10.5 grams of n-butylamine, 671 grams of the C16-18 alpha-olefin of Example 1, 1329 grams of the soybean oil of Example 1 and 154 grams of hydrogen sulfide. The reaction mixture is heated to 140°C over 6 hours. The reaction mixture reaches a maximum pressure of 230 psig at 127°C. The reaction mixture is heated to 150°C and the temperature is maintained for 7 hours. The reaction mixture is vacuum stripped to 120°C and 10mm Hg. The residue is filtered through diatomaceous earth and the filtrate is the desired product. The product contains 11.9% sulfur and has an ASTM color (neat, i.e. no diluent) of 2.0 and a 1a copper strip.

Table 1 contains Examples 3-7. These examples are prepared by the process described in Example 1.

Table 1

| | Soybean Oil | C1618 Olefin | Oleic Acid | Sulfur | Hydrogen Sulfide | Catalyst | Hold Time | Hold Temp | %S | Copper Strip (at 1%) | ASTM Color (neat) |
|---|---|---|---|---|---|---|---|---|---|---|---|
| 3 | 1329 | 603 | 68 | 100 | 163 | 40 (ZDDC*) | 170°C | 5 hrs | 11.8 | 1a | 1.5 |
| 4 | 665 | 336 | --- | 59 | 63.5 | 9.3 (Et₃N) | 150°C | 5 hrs | 11.8 | 1a | L1.5 |
| 5 | 664.5 | 301.5 | 34 | 59 | 63.5 | 20 (ZDDC) | 170°C | 5 hrs | 11.7 | 1a | 3.5 |
| 6 | 666.8 | 301.4 | 36.3 | 50 | 63.5 | 20 (ZDDC*) | 170°C | 5 hrs | 10.6 | 1a | L4.5 |
| 7 | 665 | 302 | 34 | 50 | 68 | 10 (ZDDC*) | 170°C | 5 hrs | 11.5 | 1a | 1.5 |

a) zinc diamyldithiocarbamate

The following comparative example relates to sulfurization of a mixture of soybean oil and olefin using only sulfur.

Comparative Example A

A reaction vessel is charged with 663.8 grams of soybean oil of Example 1, 301.4 grams of the C16-18 alpha-olefin of Example 1, 34.8 grams of oleic acid, 118 grams of sulfur and 10 grams of zinc diamyldithiocarbamate. The reaction vessel is heated to 130°C under nitrogen and the reaction temperature is maintained for 9 hours at 130°C. The temperature is decreased to 100°C and the vessel contents are filtered through diatomaceous earth. The filtrate is the desired product and has 10.2% sulfur and a double diluted ASTM color of 5.0.

Comparative Example B

A reaction vessel is charged with 1000 grams of the soybean oil of Example 1, 454 grams of the alpha-olefin of Example 1, and 52.4 grams of oleic acid. The mixture is heated to 140°C, where 178 grams of sulfur is added to the reaction mixture. The mixture is heated to 155°C and the temperature increases exothermically to a maximum of 188°C. The reaction temperature is maintained at 166°C to 177°C for 6 hours. The reaction mixture is cooled to 120°C and blown with nitrogen. The reaction mixture is filtered through diatomaceous earth and the filtrate is the desired product. The filtrate has 10.3% sulfur and has a double diluted ASTM color of 5.0.

The following Table 2 contains side by side comparisons of Comparative Examples A and B with Example 1-7 above.

Table 2

|  | Sulfur (%) | ASTM Color (Neat) |
| --- | --- | --- |
| Ex. 1 | 11.8 | L1.5 |
| Ex. 2 | 11.6 | 2.0 |
| Ex. 3 | 11.8 | 1.5 |
| Ex. 4 | 11.8 | L1.5 |
| Ex. 5 | 11.7 | 3.5 |
| Ex. 6 | 10.6 | L4.5 |
| Ex. 7 | 11.5 | 1.5 |
| Comparative Ex. A | 10.2 | D5.0* |
| Comparative Ex. B | 10.3 | D5.0* |

\* Double Diluted ASTM Color

As can be seen from the above Table, the sulfurization products prepared using sulfur and hydrogen sulfide have lighter ASTM color than the sulfurization products prepared using only sulfur. As can be seen from Table 2, the products made by the process of the present invention have lighter color.

Lubricants

As previously indicated, the sulfurized combination of a fatty acid or ester and an olefin are useful in lubricants where they can function primarily as antiwear, antiweld, antiscuff, extreme pressure, anticorrosion, antioxidation and/or friction modifying agents. They can be employed in a variety of lubricants based on diverse oils of lubricating viscosity, including natural and synthetic lubricating oils and mixtures thereof. These lubricants include crankcase lubricating oils for spark-ignited and compression-ignited internal combustion engines, including automobile and truck engines, two-cycle engines, aviation piston engines, marine and railroad diesel engines, and the like. They can also be used in natural gas engines, stationary power engines and turbines and the like. Automatic or manual transmission fluids, transaxle lubricants, gear lubricants, both for open and enclosed systems, tractor lubricants, metal-working lubricants, hydraulic fluids and other lubricating oil and grease compositions can also benefit from the incorporation therein of the compositions of the present invention. They may also be used in lubricants for wirerope, walking cam, slideway, rock drill, chain and conveyor belt, worm gear, bearing, and rail and flange applications.

The sulfurized combination of a fatty acid or ester and an olefin may be used in lubricants or in concentrates. The concentrate may contain the sulfurized composition or other components used in preparing fully formulated lubricants. The concentrate also contains a substantially inert organic diluent, which includes kerosene, mineral distillates, or one or more of the oils of lubricating viscosity discussed below. In one embodiment, the concentrates contain from about 0.01% up to about 90%, or from about 0.1% to about 80%, or from about 1% up to about 70% by weight of the sulfurized combination of a fatty acid or ester and an olefin.

The sulfurized combination of a fatty acid or ester and an olefin may be present in a final product, blend, or concentrate in any amount effective in lubricating compositions. Generally the sulfurized composition is present in the lubricating composition in an amount from about 0.01% up to about 10%, or from about 0.1% up to about 8%, or from about 0.5% up to about 7%, or from about 1% up to about 5% by weight. In one embodiment, when the sulfurized combination of a fatty acid or ester and an olefin is used in oils, such as gear oils, they are preferably present in an amount from about 0.5% up to about 8%, or from about 1% up to 5%, or from about 1.5% up to about 4% by weight of the lubricating composition. When the sulfurized combination of a fatty acid or ester and an olefin is used in hydraulic fluids, they are generally present in an amount from about 0.01% up to about 2%, or from about 0.3% up to about 1% by weight of the hydraulic fluid.

The lubricating compositions and methods of this invention employ an oil of lubricating viscosity, including natural or synthetic lubricating oils and mixtures thereof. Natural oils include animal oils, vegetable oils, mineral lubricating oils, and solvent or acid treated mineral oils. Synthetic lubricating oils include hydrocarbon oils (polyalpha-olefins), halo-substituted hydrocarbon oils, alkylene oxide polymers, esters of dicarboxylic acids and polyols, esters of phosphorus-containing acids, polymeric tetrahydrofurans and silicon-based oils. Unrefined, refined, and rerefined oils, either natural or synthetic, may be used in the compositions of the present invention. A description of oils of lubricating viscosity occurs in U.S. Patent 4,582,618 (column 2, line 37 through column 3, line 63, inclusive), herein incorporated by reference for its disclosure to oils of lubricating viscosity.

In one embodiment, the oil of lubricating viscosity or a mixture of oils of lubricating viscosity are selected to provide lubricating compositions with a kinematic viscosity of at least about 3.5 cSt, or at least about 4.0 cSt at 100°C. In one embodiment, the lubricating compositions have an SAE gear viscosity number of at least about SAE 65, more preferably at least about SAE 75. The lubricating composition may also have a so-called multigrade rating such as SAE 75W-80, 75W-90, 75W-90, or 80W-90. Multigrade lubricants may include a viscosity improver which is formulated with the oil of lubricating viscosity to provide the above lubricant grades. Useful viscosity improvers include but are not limited to polyolefins, such as ethylene-propylene copolymers, or polybutylene rubbers, including hydrogenated rubbers, such as styrene-butadiene or styrene-isoprene rubbers; or polyacrylates, including polymethacrylates. Preferably the viscosity improver is a polyolefin or polymethacrylate, more preferably polymethacrylate. Viscosity improvers available commercially include Acryloid™ viscosity improvers available from Rohm & Haas; Shellvis™ rubbers available from Shell Chemical; and Lubrizol 3174 available from The Lubrizol Corporation.

In another embodiment, the oil of lubricating viscosity is selected to provide lubricating compositions for crankcase applications, such as for gasoline and diesel engines. Typically, the lubricating compositions are selected to provide an SAE crankcase viscosity number of 10W, 20W, or 30W lubricants. The lubricating composition may also have a so called multi-grade rating such as SAE 5W-30, 10W-30, 10W-40, 20W-50, etc. As described above, multi-grade lubricants include a viscosity improver which is formulated with the oil of lubricating viscosity to provide the above lubricant grades.

Other Additives

The invention also contemplates the use of other additives together with the sulfurized combination of a fatty acid or ester and an olefin. Such additives include, for example, detergents and dispersants, corrosion- and oxidation-inhibiting agents, pour point depressing agents, extreme pressure agents, antiwear agents, color stabilizers and anti-foam agents.

The detergents are exemplified by oil-soluble neutral and basic salts (i.e. overbased salts) of alkali, alkaline earth, or transition metals with sulfonic acids, carboxylic acids, including hydrocarbyl substituted carboxylic acylating agents, phenols or organic phosphorus acids. The hydrocarbyl-substituted carboxylic acylating agents include agents which have a hydrocarbyl group derived from a polyalkene, such as polybutene. The polyalkenes include homopolymers and interpolymers derived from one or more of the above olefins. The polyalkene is generally characterized as containing from about 8 up to about 300, or from about 30 up to about 200, or from about 35 up to 100 carbon atoms. In one embodiment, the polyalkene is characterized by an $\overline{M}n$ (number average molecular weight) from about 500 to about 5000, or from about 800 to about 2500. In another embodiment $\overline{M}n$ varies between about 500 to about 1200 or about 1300. In another embodiment, the hydrocarbyl group is derived from polyalkenes having an $\overline{M}n$ of at least about 1300 up to about 5000, and $\overline{M}w/\overline{M}n$ is from about 1.5 to about 4, preferably from about 1.8 to about 3.6, or from about 2.5 to about 3.2.

The phosphorus acids include those prepared by the treatment of a polyalkene with a phosphorizing agent, such as phosphorus pentasulfide. The most commonly used metals are sodium, potassium, lithium, calcium, and magnesium. The term "basic salt" is used to designate metal salts wherein the metal is present in stoichiometrically larger amounts than the organic acid radical. The overbased salts and borated overbased salts are prepared by means known to those in the art. Patents describing overbased salts, methods of making the salts and components for making the same include U.S. Patents 2,501,731; 2,616,911; 2,777,874; 3,384,585; 3,320,162; 3,488,284 and 3,629,109. The disclosure of these patents are hereby incorporated by reference.

The lubricants may also include a dispersant. The dispersants are known in the art. The following are illustrative.

(1) "Carboxylic dispersants" are the reaction products of carboxylic acids (or derivatives thereof) containing at least about 34 and preferably at least about 54 carbon atoms and nitrogen containing compounds (such as amine), organic hydroxy compounds (such as phenols and alcohols), and/or basic inorganic materials. These reaction products include imide, amide, and ester reaction products of carboxylic acylating agents. The carboxylic dispersants are generally prepared by reacting one or more of the above described hydrocarbyl substituted carboxylic acylating agent with an amine or hydroxy containing compound, such as an alcohol. Examples of these materials include succinimide dispersants and carboxylic ester dispersants. Examples of these "carboxylic dispersants" are described in British Patent 1,306,529 and in many U.S. Patents including the following: 3,219,666, 3,316,177, 3,340,281, 3,351,552, 3,381,022, 3,433,744, 3,444,170, 3,467,668, 3,501,405, 3,542,680, 3,576,743, 3,632,511, 4,234,435, and Re 26,433.

(2) "Amine dispersants" are the reaction products of relatively high molecular weight aliphatic or alicyclic halides and amines, preferably polyalkylene polyamines. These dispersants are described above as polyalkene-substituted amines. Examples thereof are described for example, in the following U.S. Patents: 3,275,554, 3,438,757, 3,454,555, and 3,565,804.

(3) "Mannich dispersants" are the reaction products of alkylphenols and aldehydes (especially formaldehyde) and amines (especially amine condensates and polyalkylenepolyamines). The materials described in the following U.S. Patents are illustrative: 3,036,003, 3,236,770, 3,414,347, 3,448,047, 3,461,172, 3,539,633, 3,586,629, 3,591,598, 3,634,515, 3,725,480, 3,726,882, and 3,980,569.

(4) "Post-treated dispersants" are the products obtained by post-treating the carboxylic, amine or Mannich dispersants with reagents such as urea, thiourea, carbon disulfide, aldehydes, ketones, carboxylic acids, hydrocarbon-substituted succinic anhydrides, nitriles, epoxides, boron compounds, phosphorus compounds or the like. Exemplary materials of this kind are described in the following U.S. Patents: 3,200,107, 3,282,955, 3,367,943, 3,513,093, 3,639,242, 3,649,659, 3,442,808, 3,455,832, 3,579,450, 3,600,372, 3,702,757, and 3,708,422.

(5) "Polymeric dispersants" are interpolymers of oil-solubilizing monomers such as decyl methacrylate, vinyl decyl ether and high molecular weight olefins with monomers containing polar substituents, e.g., aminoalkyl acrylates or acrylamides and poly-(oxyethylene)-substituted acrylates. Polymeric dispersants include esters of styrene-maleic anhydride copolymers. Examples thereof are disclosed in the following U.S. Patents: 3,329,658, 3,449,250, 3,519,656, 3,666,730, 3,687,849, and 3,702,300.

The above-noted patents are incorporated by reference herein for their disclosures of dispersants.

Auxiliary extreme pressure and/or antiwear agents and corrosion- and oxidation-inhibiting agents may also be included together with the sulfurized combination of a fatty acid or ester and an olefin. The auxiliary extreme pressure and/ or antiwear agents include sulfur compounds, other than the above described sulfur compositions, and phosphorus or boron antiwear or extreme pressure agent. The sulfur compound is present in an amount from about 0.05% or about 0.1% up to about 10%, or from about 1% up to about 7%, or from about 1.5% up to about 5% by weight of the lubricating composition. Typically, the phosphorus or boron containing antiwear or extreme pressure agent is present in the lubricants and functional fluids at a level from about 0.01% up to about 10%, or from about 0.05% up to about 3%, or from about 0.08% up to about 2% by weight.

The sulfur compounds include mono- or polysulfide compositions, or mixtures thereof. In one embodiment, the polysulfides may be a mixture of di-, tri- or tetrasulfide materials, preferably having a majority of

9

trisulfide being preferred. Materials which may be sulfurized include olefins or polyolefins made therefrom, terpenes, or Diels-Alder adducts. Olefins having about 3 to about 30, or to about 16 (most often less than about 9) carbon atoms are particularly useful. Olefins having from two to about 5 or to about 4 carbon atoms are particularly useful. Isobutene, propylene and their dimers, trimers and tetramers, and mixtures thereof are especially preferred olefins. Of these compounds, isobutylene and diisobutylene are particularly desirable. The olefins which may be sulfurized, the sulfurized olefin, and methods of preparing the same are described in U.S. Patents 4,119,549, 4,199,550, 4,191,659, and 4,344,854. The disclosure of these patents is hereby incorporated by reference for its description of the sulfurized olefins and preparation of the same.

Examples of phosphorus or boron containing antiwear or extreme pressure agents include a metal thiophosphate; a phosphoric acid ester or salt thereof; a phosphite; a phosphorus-containing carboxylic acid, ester, ether, or amide; a borated dispersant; an alkali metal borate; a borated overbased compound; a borated fatty amine; a borated phospholipid; and a borate ester. The phosphorus acids include the phosphoric, phosphonic, phosphinic and thiophosphoric acids including dithiophosphoric acid as well as the monothiophosphoric acid, thiophosphinic and thiophosphonic acids.

In one embodiment, the phosphorus or boron containing antiwear or extreme pressure agent is a phosphorus acid ester prepared by reacting one or more phosphorus acid or anhydride with an alcohol containing from one to about 30, or from about 3 to about 12 carbon atoms. The phosphorus acid or anhydride is generally an inorganic phosphorus reagent, such as phosphorus pentoxide, or a phosphorus sulfide, including phosphorus pentasulfide. Examples of useful phosphorus acid esters include the phosphoric acid esters prepared by reacting a phosphoric acid or anhydride with cresol. An example of these phosphorus acid esters is tricresylphosphate.

In another embodiment, the phosphorus or boron antiwear or extreme pressure agent is a thiophosphorus acid ester or salt thereof. The thiophosphorus acid esters may be prepared by reacting phosphorus sulfides with alcohols, such as those described above.

In another embodiment, the phosphorus or boron antiwear or extreme pressure agent is a dihydrocarbyl dithiophosphoric acid or dihydrocarbyl phosphorodithioic acid. Generally, each hydrocarbyl group independently contains from about 3 to about 30, or from about 3 up to about 12 carbon atoms.

In one embodiment, the dithiophosphoric acid may be reacted with an epoxide or a polyhydric alcohol, such as glycols. This reaction product may be used alone, or further reacted with a phosphorus acid, anhydride, or lower ester. The epoxide is generally an aliphatic epoxide or a styrene oxide. Examples of useful epoxides include ethylene oxide, propylene oxide, butene oxide, etc. The dithiophosphoric acids, glycols, epoxides, inorganic phosphorus reagents and methods of reacting the same are described in U.S. patent 3,197,405 and U.S. patent 3,544,465 which are incorporated herein by reference for their disclosure to these.

Useful phosphorus acid esters include those prepared by reacting phosphorus pentoxide with hydroxypropyl O,O-di(4-methyl-2pentyl)phosphorodithioate (prepared by reacting di(4-methyl-2pentyl)-phosphorodithioic acid with 1.3 moles of propylene oxide at 25°C) or O,O-di(isopropyl)phosphorodithioate (prepared by reacting diisopropyl phosphorodithioic acid with propylene oxide at 50°C).

Phosphorus acid esters may be reacted with an amine or metallic base to form an amine or metal salt. The amine salts of the phosphorus acid esters may be formed from ammonia, or an amine, including monoamines and polyamines. Useful amines include those amines disclosed in U.S. Patent 4,234,435 at Col. 21, line 4 to Col. 27, line 50, these passages being incorporated herein by reference. Tertiary aliphatic primary amines are particularly useful. Useful amine salts reaction products of a commercial aliphatic primary amine, having an average molecular weight of 191 in which the aliphatic radical is a mixture of tertiary alkyl radicals containing from 11 to 14 carbon atom, with phosphorus acid esters selected from reacting phosphorus pentoxide with hydroxypropyl O,O-di(4-methyl-2-pentyl)phosphorodithioate (prepared by reacting di(4-methyl-2pentyl)-phosphorodithioic acid with 1.3 moles of propylene oxide at 25°C) or O,O-di(isopropyl)phosphorodithioate (prepared by reacting diisopropyl phosphorodithioic acid with propylene oxide at 50°C).

The metal salts of the phosphorus acid esters are prepared by the reaction of a metal base with the phosphorus acid ester. The metals include the alkali metals, alkaline earth metals, such as calcium or magnesium, and transition metals, such as manganese, copper, and zinc. An example of a useful metal salt is a reaction product of zinc oxide and a phosphoric acid esters prepared by reacting phosphorus pentoxide with iso-octyl alcohol.

In one embodiment, phosphorus or boron containing antiwear or extreme pressure agent is a metal thiophosphate, such as zinc isopropyl methylamyl dithiophosphate, zinc isopropyl isooctyl dithiophosphate, zinc di(cyclohexyl) dithiophosphate, zinc di(isobutyl) dithiophosphate, zinc isobutyl isoamyl dithiophosphate, and zinc isopropyl sec-butyl dithiophosphate.

10

In another embodiment, the phosphorus or boron antiwear or extreme pressure agent is a metal salt of (a) at least one dithiophosphoric acid and (b) at least one aliphatic or alicyclic carboxylic acid. The dithiophosphoric acids are described above. The carboxylic acid may be a monocarboxylic or polycarboxylic acid, and having from about 2 up to about 40, or from about 4 up to about 24, or up to about 12 carbon atoms. Suitable acids include hexanoic, 2-ethylhexanoic, octanoic, and dodecanoic acids. The metal salts and their method of preparation are described in U.S. Patents 4,308,154 and 4,417,990. These patents are hereby incorporated by reference for those disclosures.

In another embodiment, the phosphorus or boron containing antiwear or extreme pressure agent is a phosphite. The phosphite may be a di- or trihydrocarbyl phosphite, independently having from 1 to about 30, or from about 2 to about 18, or up to about 8 carbon atoms in each hydrocarbyl group. Examples of specific hydrocarbyl groups include butyl, hexyl, octyl, oleyl, linoleyl, stearyl, and phenyl. Particularly useful phosphites include dibutyl phosphite, trioleyl phosphite, $C_{12-14}$ phosphite and triphenyl phosphite.

In one embodiment, the phosphorus or boron containing antiwear or extreme pressure agent is a phosphorus containing amide. The phosphorus containing amides are prepared by the reaction of one of the above described phosphorus acids, preferably a dithiophosphoric acid with an unsaturated amide. Examples of unsaturated amides include acrylamide, N,N'-methylene bis(acrylamide), methacrylamide, crotonamide, and the like. The reaction product of the phosphorus acid and the unsaturated amide may be further reacted with a linking or a coupling compound, such as formaldehyde or paraformaldehyde. The phosphorus containing amides are known in the art and are disclosed in U.S. Patents 4,670,169, 4,770,807, and 4,876,374 which are incorporated by reference for their disclosures of phosphorus amides and their preparation.

In one embodiment, the phosphorus or boron antiwear or extreme pressure agent is a phosphorus containing carboxylic ester. The phosphorus containing carboxylic esters are prepared by reaction of one of the above-described phosphorus acids, such as a dithiophosphoric acid, and an unsaturated carboxylic acid or ester. Examples of unsaturated carboxylic acids and anhydrides include acrylic acid, methacrylic acid, itaconic acid, maleic acid, fumaric acid, and maleic anhydride.

The ester may be represented by one of the formulae: $R_6 C = C(R_7)C(O)OR_8$, or $R_8 O-(O)C-HC = CH-C-(O)OR_8$, wherein each $R_7$ and $R_8$ are independently hydrogen or a hydrocarbyl group having 1 to about 18, or to about 12, or to about 8 carbon atoms, $R_6$ is hydrogen or an alkyl group having from 1 to about 6 carbon atoms. In one embodiment, $R_6$ is preferably hydrogen or a methyl group.

Examples of unsaturated carboxylic esters include methyl acrylate, ethyl acrylate, 2-ethylhexyl acrylate, 2-hydroxyethyl acrylate, ethyl methacrylate, 2-hydroxyethyl methacrylate, 2-hydroxypropyl methacrylate, 2-hydroxypropyl acrylate, ethyl maleate, butyl maleate and 2-ethylhexyl maleate. The above list includes mono- as well as diesters of maleic, fumaric and citraconic acids.

In one embodiment, the phosphorus or boron containing antiwear or extreme pressure agent is a reaction product of a phosphorus acid, preferably a dithiophosphoric acid, and a vinyl ether. The vinyl ether is represented by the formula $R_9-CH_2 = CH-OR_{10}$ wherein $R_9$ is independently hydrogen or a hydrocarbyl group having from 1 up to about 30, or up to about 12 carbon atoms. $R_{10}$ is a hydrocarbyl group defined the same as $R_9$. Examples of vinyl ethers include methyl vinyl ether, propyl vinyl ether, 2-ethylhexyl vinyl ether and the like.

In one embodiment, the phosphorus or boron containing antiwear or extreme pressure agent is a reaction product of a phosphorus acid, such as a dithiophosphoric acid, and a vinyl ester. The vinyl ester may be represented by the formula $R_{11}CH = CH-O(O)CR_{12}$, wherein $R_{11}$ is hydrogen, or a hydrocarbyl group having from 1 to about 30, or to about 12 carbon atoms, preferably hydrogen, and $R_{12}$ is a hydrocarbyl group having 1 to about 30, or to about 12, or to about 8 carbon atoms. Examples of vinyl esters include vinyl acetate, vinyl 2-ethylhexanoate, vinyl butanoate, etc.

In another embodiment, the phosphorus or boron containing antiwear or extreme pressure agent is an alkali metal borate. Alkali metal borates are generally a hydrated particulate alkali metal borate which are known in the art. Alkali metal borates include mixed alkali and alkaline earth metal borates. These alkali metal borates are available commercially. Representative patents disclosing suitable alkali metal borates and their methods of manufacture include U.S. 3,997,454; 3,819,521; 3,853,772; 3,907,601; 3,997,454; and 4,089,790. These patents are incorporated by reference for their disclosures of alkali metal borates and methods of their manufacture.

In another embodiment, the phosphorus or boron containing antiwear or extreme pressure agent is a borated overbased compound. Borated overbased compounds are generally prepared by reacting one or more or the above overbased compounds, usually as a carbonated overbased compound with a boron compound, which include boric acid and lower alkyl (e.g. containing less than about 8 carbon atoms) boron esters. The overbased compounds are generally characterized as having a metal ratio from about 5 to about

11

40, or from about 10 to about 35, or from about 15 to about 30. Examples of borated overbased compounds include borated overbased sodium alkylbenzene sulfonate, borated overbased polybutenyl ($\overline{Mn}$ = 950) substituted succinate, and borated overbased magnesium alkylbenzene sulfonate. Borated overbased compositions, lubricating compositions contain the same and methods of preparing borated overbased compositions are found in U.S. Patents 4,744,920, 4,792,410, and PCT publication WO 88/03144. The disclosure of these references are hereby incorporated by reference.

In another embodiment, the phosphorus or boron antiwear or extreme pressure agent is a borated fatty amine. The borated amines are prepared by reacting one or more of boron compounds, with a fatty amine, e.g. an amine having from about four to about eighteen carbon atoms. The borated fatty amines are prepared by reacting the amine with the boron compound at a temperature from about 50°C to about 300°C, or from about 100°C to about 250°C, and at an amine to boron compound equivalent ratio of 3:1 to 1:3.

In another embodiment, the phosphorus or boron containing antiwear or extreme pressure agent is a borated epoxide. The borated fatty epoxides are generally the reaction product of one or more boron compounds, with at least one epoxide, generally having at least 8 carbon atoms. The borated fatty epoxides are generally known and are disclosed in U.S. Patent 4,584,115. This patent is incorporated by reference for its disclosure of borated fatty epoxides and methods for preparing the same.

In another embodiment, the phosphorus or boron containing antiwear or extreme pressure agent is a borated phospholipid. The borated phospholipids are prepared by reacting a combination of one or more phospholipid and one or more boron compound. Phospholipids, sometimes referred to as phosphatides and phospholipins, are lipids which contain a phosphoric acid or derivative thereof. Glycerophospholipids, have been referred to as phosphatides and phosphoglycerides, are any glycerophosphoric acid or derivative thereof with one or two acyl, alkenyl or alkyl groups attached to a glycerol residue. These materials may be prepared synthetically or may be derived from natural sources. Natural sources that produce phospholipids are commonly seeds as well as animal products, such as eggs. Optionally, the combination may include an amine, an acylated nitrogen compound, such as reaction products of carboxylic acrylating agents and polyamines, a carboxylic ester, such as reaction products of carboxylic acrylating agents and alcohols and optionally amines, a Mannich reaction product, or a basic or neutral metal salt of an organic acid compound. The above borated phospholipids and their preparation are described in PCT International Publication WO 92/18586. This publication is hereby incorporated by reference for such description.

Other antiwear and extreme pressure agents include chlorinated aliphatic hydrocarbons, such as chlorinated wax; sulfurized alkylphenols; phosphosulfurized hydrocarbons, such as the reaction product of a phosphorus sulfide with turpentine or methyl oleate; metal thiocarbamates, such as zinc dioctyldithiocarbamate, or barium diheptylphenyl dithiocarbamate; dithiocarbamate esters, such as reaction products of an amine (e.g., butylamine), carbon disulfide, and one or more of the above unsaturated amide, ester, acid, or ether, such as acrylic, methacrylic, maleic, or fumaric acids, esters, or salts and acrylamides; and dithiocarbamates, such as alkylene coupled dithiocarbamates, which include methylene or phenylene coupled bis(butyldithiocarbamates), and bis-(s-alkyldithiocarbamoyl) disulfides, which are known and referred to as sulfur-coupled thiocarbamates. Many of the above-mentioned extreme pressure agents and corrosion- and oxidation-inhibitors also serve as antiwear agents.

Pour point depressants are an additive often included in the lubricating oils described herein. Examples of useful pour point depressants are polymethacrylates; polyacrylates; polyacrylamides; condensation products of haloparaffin waxes and aromatic compounds; vinyl carboxylate polymers; and polymers of dialkylfumarates, vinyl esters of fatty acids and alkyl vinyl ethers. Pour point depressants useful for the purposes of this invention, techniques for their preparation and their uses are described in U.S. Patents 2,387,501; 2,015,748; 2,655,479; 1,815,022; 2,191,498; 2,666,746; 2,721,877; 2,721,878; and 3,250,715 which are hereby incorporated by reference for their relevant disclosures.

Antifoam agents are used to reduce or prevent the formation of stable foam. Typical antifoam agents include silicones or organic polymers. Additional antifoam compositions are described in "Foam Control Agents", by Henry T. Kerner (Noyes Data Corporation, 1976), pages 125-162.

The following examples relate to lubricating compositions containing the sulfurized compositions of the present invention.

Example I

A lubricant is prepared by incorporating 1.5% by weight of the product of Example 1 into a SAE 10W-40 lubricating oil mixture.

Example II

A gear lubricant is prepared by incorporating 1% by weight of the product of Example 2 into an SAE 90 lubricating oil mixture.

Example III

A gear lubricant is prepared by incorporating 1.2% by weight of the product of Example 4; and 3.5% by weight of a dibutyl polysulfide prepare as described in U.S. Patent 4,344,854 into an SAE 80W-90 lubricating oil mixture.

Example IV

A lubricant is prepared as described in Example III except a SAE 10W-40 lubricating oil mixture is used in place of the SAE 80W-90 lubricating oil mixture.

Example V

A gear lubricant is prepare by incorporating 1% by weight the product of Example 5, and 1.9% by weight of a zinc isopropyl, methylamyl dithiophosphate into an SAE 80W-90 lubricating oil mixture.

Example VI

A lubricant is prepared as described in Example V except an SAE 10W-30 lubricating oil mixture is used in place of the SAE 80W-90 lubricating oil mixture.

Example VII

A gear lubricant is prepared by incorporating 1.4% by weight the product of Example 2, 3.4% by weight of the polysulfide of Example III, and 1.2% by weight of an amine salt of a dithiophosphoryl phosphorate ester, prepared by reacting a diamyldithiophosphoric acid with propylene oxide to form an intermediate, which is reacted with phosphorus pentoxide to form a phosphoric acid ester, which is then reacted with Primene 81R, which is a mixture of $C_{11-14}$ tertiary aliphatic amines sold by Rohm and Haas Chemical Company, into a SAE 75W-90 lubricant oil mixture.

Example VIII

A lubricant is prepared as described in Example VII except an SAE 10W-30 lubricating oil mixture is used in place of the SAE 75W-90 lubricant oil mixture.

Example IX

A lubricant is prepared as described in Example VII except 0.5% by weight of a succinic dispersant prepared by reacting a polybutenyl-substituted succinic anhydride, with a polybutenyl group having a number average molecular weight of about 950, with a commercial polyamine having the equivalent structure of tetraethylene pentamine is incorporated into the 75W-90 lubricant oil mixture.

Example XII

A cutting fluid is prepared by incorporating 5% of the product of Example 3 into a 100 neutral mineral oil.

Grease

Where the lubricant is to be used in the form of a grease, the lubricating oil generally is employed in an amount sufficient to balance the total grease composition. Generally, the grease compositions will contain various quantities of thickeners and other additive components to provide desirable properties. The sulfurized compositions are present in an amount from about 0.5% up to about 10%, or from about 1% or up to about 5% by weight.

A wide variety of thickeners can be used in the preparation of the greases of this invention. The thickener is employed in an amount from about 0.5 to about 30 percent, and preferably from 3 to about 15 percent by weight of the total grease composition. Including among the thickeners are alkali and alkaline earth metal soaps of fatty acids and fatty materials having from about 12 to about 30 carbon atoms. The metals are typified by sodium, lithium, calcium and barium. Examples of fatty materials include stearic acid, hydroxystearic acid, stearin, oleic acid, palmitic acid, myristic acid, cottonseed oil acids, and hydrogenated fish oils.

Other thickeners include salt and salt-soap complexes, such as calcium stearateacetate (U.S. Patent 2,197,263), barium stearate-acetate (U.S. Patent 2,564,561), calcium stearatecaprylate-acetate complexes (U.S. Patent 2,999,066), calcium salts and soaps of low-intermediate- and high-molecular weight acids and of nut oil acids, aluminum stearate, and aluminum complex thickeners. Useful thickeners include hydrophilic clays which are treated with an ammonium compound to render them hydrophobic. Typical ammonium compounds are tetraalkyl ammonium chlorides. These clays are generally crystalline complex silicates. These clays include bentonite, attapulgite, hectorite, illite, saponite, sepiolite, biotite, vermiculite, zeolite clays and the like.

Example G-1

A grease is prepared by incorporating 4% by weight of the product of Example 1 into a lithium grease, Southwest Petro Chem Lithium 12 OH Base Grease.

Example G-2

A grease is prepared as described in Example G-1 except 5% by weight of the product of Example 3 is used in place of the product of Example 1.

Aqueous Compositions

The invention also includes aqueous compositions characterized by an aqueous phase with at least one sulfurized composition of the present invention dispersed or dissolved in said aqueous phase. The water-based functional fluids may be in the form of solutions; or micelle dispersions or microemulsions which appear to be true solutions. Preferably, this aqueous phase is a continuous aqueous phase although, in some embodiments, the aqueous phase can be a discontinuous phase.

These aqueous compositions usually contain at least about 25% by weight water. Such aqueous compositions encompass both concentrates containing from about 25% to about 80% by weight, or from about 40% to about 65% water; and water-based functional fluids containing generally over about 80% by weight of water. The concentrates generally contain less than about 50%, or less than about 25%, or less than about 15%, and or less than about 6% hydrocarbon oil. The hydrocarbon oil may be one or more of the above oils of lubricating viscosity. The water-based functional fluids generally contain less than about 15%, or less than about 5%, and or less than about 2% hydrocarbon oil. The sulfurized compositions are generally present in the aqueous compositions in an amount from about 0.2% up to about 10%, or from about 0.5% up to about 5%, or from about 0.75% up to about 2.5% of the aqueous composition.

These concentrates and water-based functional fluids can optionally include other conventional additives commonly employed in water-based functional fluids. These other additives include surfactants; thickeners; oil-soluble, water-insoluble functional additives such as antiwear agents, extreme pressure agents, dispersants, etc.; and supplemental additives such as corrosion-inhibitors, shear stabilizing agents, bactericides, dyes, water-softeners, odor masking agents, antifoam agents and the like.

The dispersants or emulsifiers include the nitrogen-containing, phosphorus-free carboxylic solubilizers disclosed in U.S. Patents: 4,329,249; 4,368,133; 4,435,297; 4,447,348; and 4,448,703. These patents are incorporated herein by reference. Briefly, these dispersants are made by reacting (I) at least one or more hydrocarbyl carboxylic acid acylating agent with (II) at least one (a) N-(hydroxyl-substituted hydrocarbyl)-amine, (b) hydroxyl-substituted poly(hydrocarbyloxy) analog of said amine (a), or (c) mixtures of (a) and (b). Preferred acylating agents include the substituted succinic acids or anhydrides. Preferred amines include the primary, secondary and tertiary alkanol amines or mixtures thereof. These dispersants are preferably used at effective levels to disperse or dissolve the various additives, particularly the functional additives discussed below, in the concentrates, emulsions and/or water-based functional fluids of the present invention. In one embodiment, the dispersant is the reaction product of polyisobutenyl ($\overline{M}n = 950$)-substi-

tuted succinic anhydride with diethylethanolamine.

The surfactants that are useful in the aqueous compositions of the invention can be of the cationic, anionic, nonionic or amphoteric type. Many such surfactants of each type are known to the art. See, for example, McCutcheon's "Emulsifiers & Detergents", 1981, North American Edition, published by McCutcheon Division, MC Publishing Co., Glen Rock, New Jersey, U.S.A., which is hereby incorporated by reference for its disclosures in this regard. Specific nonionic surfactant types include alkylene oxide treated products, such as ethylene oxide treated phenols and ethylene oxide/propylene oxide block copolymers, alcohols, esters, including glycerol esters, amines, including hydroxyalkyl amines, and amides. Examples of surfactants include alkylene oxide treated alkylphenols, sold commercially under the tradename of Triton® such as Triton® X-100, available commercially from Union Carbide Chemical Company; alkoxylated amines available from Akzo Chemie under the names ETHODUOMEEN® (polyethoxylated diamines), ETHOMEEN® (polyethoxylated aliphatic amines), ETHOMID® (polyethoxylated amides), and ETHOQUAD (polyethoxylated quaternary ammonium chlorides); and tall oil acids, sold under the trade name Unitol DT/40 (available from Union Camp Corp).

Among the useful anionic surfactant types are the widely known carboxylate soaps, metal organosulfates, metal sulfonates, metal sulfonylcarboxylates, and metal phosphates. Useful cationic surfactants include nitrogen compounds such as amine oxides and the well-known quaternary ammonium salts. Amphoteric surfactants include amino acid-type materials and similar types.

Surfactants are generally employed in effective amounts to aid in the dispersal of the various additives, particularly in the functional additives discussed below of the invention. The concentrates may contain up to about 75% by weight, or from about 10% to about 75% by weight of one or more of these surfactants. The water-based functional fluids can contain up to about 15% by weight, or from about 0.05% to about 15% by weight of one or more of these surfactants.

Often the aqueous compositions of this invention contain at least one thickening agent. Generally, these thickening agents can be polysaccharides, including cellulose ethers and esters, such as hydroxyethyl cellulose and the sodium salt of carboxymethyl cellulose, synthetic thickening polymers, or mixtures of two or more of these. Specific examples of such gums are gum agar, guar gum, gum arabic, algin, dextrans, xanthan gum and the like. A thickener can also be synthetic thickening polymers. Representative of them are polyacrylates, polyacrylamides, hydrolyzed vinyl esters, water-soluble homo- and interpolymers of acrylamidoalkane sulfonates and other comonomers such as acrylonitrile, styrene and the like.

Preferred thickening agents include the water-dispersible reaction products formed by reacting at least one hydrocarbyl-substituted succinic acid and/or anhydride wherein the hydrocarbyl group has from about 8 up to about 40, or from about 12 up to about 30, or from about 16 up to about 24, or up to about 18 carbon atoms, with at least one water-dispersible amine terminated poly(oxyalkylene) or at least one water-dispersible hydroxy-terminated polyoxyalkylene. Examples of water-dispersible amine-terminated poly-(oxyalkylene)s that are useful in accordance with the present invention are disclosed in U.S. Patents 3,021,232; 3,108,011; 4,444,566; and Re 31,522. The disclosures of these patents are incorporated herein by reference. Water-dispersible amine terminated poly(oxyalkylene)s that are useful are commercially available from the Texaco Chemical Company under the trade name Jeffamine®. Water-dispersible hydroxy-terminated polyoxyalkylenes are commercially available from BASF Wyandotte Corporation under the tradename "Tetronic" and "Pluronic". Useful hydroxy-terminated polyoxyalkylenes are disclosed in U.S. Patents 2,674,619 and 2,979,528, which are incorporated herein by reference.

The reaction between the succinic acid and/or anhydride and the amine- or hydroxy-terminated polyoxyalkylene is described in U.S. Patent 4,659,492 this patent is incorporated herein by reference for its teachings with respect to the use of the reaction product of a hydrocarbyl-substituted succinic acid or anhydride and hydroxy-terminated poly(oxyalkylene).

When the thickener is formed using an amine-terminated poly(oxyalkylene), the thickening characteristics of said thickener can be enhanced by combining it with at least one of the above surfactant. When such surfactants are used, the weight ratio of thickener to surfactant is generally in the range of from about 1:5 to about 5:1, or from about 1:1 to about 3:1.

Typically, the thickener is present in a thickening amount in the aqueous compositions of this invention. When used, the thickener is generally present at a level of up to about 70% by weight, or from about 20% to about 50% by weight of the concentrates of the invention. The thickener is preferably present at a level in the range of from about 1.5% to about 10% by weight, or from about 3% to about 6% by weight of the functional fluids of the invention.

The functional additives that may also be included in the aqueous systems are typically oil-soluble, water-insoluble additives which function in conventional oil-based systems as extreme pressure agents, anti-wear agents, load-carrying agents, dispersants, friction modifiers, lubricity agents, etc. They can also function as anti-slip agents, film formers and friction modifiers. As is well known, such additives can function in two or more of the above-mentioned ways; for example, extreme pressure agents often function as load-carrying agents.

The term "oil-soluble, water-insoluble functional additive" refers to a functional additive which is not soluble in water above a level of about 1 gram per 100 parts of water at 25°C, but is soluble in mineral oil to the extent of at least 1 gram per liter at 25°C. These functional additives may also include certain solid lubricants such as graphite, molybdenum disulfide and polytetrafluoroethylene and related solid polymers. These functional additives can also include frictional polymer formers, which form materials which are dispersed in a liquid are believed to polymerize under operating conditions. A specific example of such materials is dilinoleic acid and ethylene glycol combinations which can form a polyester frictional polymer film. These materials are known to the art and descriptions of them are found, for example, in the journal "Wear", Volume 26, pages 369-392, and West German Published Patent Application 2,339,065. These disclosures are hereby incorporated by reference for their discussions of frictional polymer formers.

Typically these functional additives are known metal or amine salts of organo sulfur, phosphorus, boron or carboxylic acids which are the same as or of the same type as used in oil-based fluids and are described above.

Many such functional additives are known to the art. For example, descriptions of additives useful in conventional oil-based systems and in the aqueous systems of this invention are found in "Advances in Petroleum Chemistry and Refining", Volume 8, edited by John J. McKetta, Interscience Publishers, New York, 1963, pages 31-38 inclusive; Kirk-Othmer "Encyclopedia of Chemical Technology", Volume 12, Second Edition, Interscience Publishers, New York, 1967, page 575 et seq.; "Lubricant Additives" by M.W. Ranney, Noyes Data Corporation, Park Ridge, N.J., U.S.A., 1973; and "Lubricant Additives" by C.V. Smallheer and R.K. Smith, The Lezius-Hiles Co., Cleveland, Ohio, U.S.A. These references are hereby incorporated by reference for their disclosures of functional additives useful in the compositions of this invention.

The functional additive can also be a film former such as a synthetic or natural latex or emulsion thereof in water. Such latexes include natural rubber latexes and polystyrene-butadienes synthetic latex.

The functional additive can also be an anti-chatter or anti-squawk agent. Examples of the former are the amide-metal dithiophosphate combinations such as disclosed in West German Patent 1,109,302; amine salt-azomethene combinations such as disclosed in British Patent Specification 893,977; or amine dithiophosphate such as disclosed in U.S. Patent 3,002,014. Examples of anti-squawk agents are N-acyl-sarcosines and derivatives thereof such as disclosed in U.S. Patents 3,156,652 and 3,156,653; sulfurized fatty acids and esters thereof such as disclosed in U.S. Patents 2,913,415 and 2,982,734; and esters of dimerized fatty acids such as disclosed in U.S. Patent 3,039,967. The above-cited patents are incorporated herein by reference for their disclosure to anti-chatter and anti-squawk agents.

Typically, the functional additive is present in a functionally effective amount. The term "functionally effective amount" refers to a sufficient quantity of an additive to impart desired properties intended by the addition of said additive.

The aqueous systems of this invention often contain at least one optional inhibitor for corrosion of either ferrous or non-ferrous metals or both. The inhibitor can be organic or inorganic in nature. Included are those described in "Protective Coatings for Metals" by Burns and Bradley, Reinhold Publishing Corporation, Second Edition, Chapter 13, pages 596-605, the disclosure of which relative to inhibitors are hereby incorporated by reference. Specific examples of useful inorganic inhibitors include alkali metal nitrites, sodium di- and tripolyphosphate, potassium and dipotassium phosphate, alkali metal borate and mixtures of the same. Specific examples of organic inhibitors include hydrocarbyl amine and hydroxy-substituted hydrocarbyl amine neutralized acid compounds, such as neutralized phosphates and hydrocarbyl phosphate esters, neutralized fatty acids, neutralized aromatic carboxylic acids (e.g., 4-tertiarybutyl benzoic acid), neutralized naphthenic acids and neutralized hydrocarbyl sulfonates. Particularly useful amines include the alkanolamines such as ethanolamine, diethanolamine.

The aqueous systems of the present invention can also include at least one bactericide. Such bactericides are well known to those of skill in the art and specific examples can be found in the aforementioned McCutcheon publication "Functional Materials" under the heading "Antimicrobials" on pages 9-20 thereof. This disclosure is hereby incorporated by reference as it relates to suitable bactericides for use in the aqueous compositions or systems of this invention.

The aqueous systems of the present invention can also include such other materials as dyes, e.g., an acid green dye; water softeners, e.g., ethylene- diaminetetraacetate sodium salt or nitrilotriacetic acid; odor masking agents, e.g., citronella, oil of lemon; antifreeze additive, e.g., , ethylene glycol and analogous polyoxyalkylene polyols; and antifoamants, such as the well-known silicone antifoamant agents.

Discussion of aqueous compositions and components of aqueous systems occurs in U.S. Patent 4,707,301, herein incorporated by reference for its disclosure of aqueous compositions and components of aqueous compositions.

Examples A-1 to A-2

The following examples relate to aqueous compositions containing the sulfur compositions. The examples are prepared by mixing the components in a homogenizer.

|  | A-1 | A-2 |
|---|---|---|
| 100 neutral mineral oil | 4.0 | 4.0 |
| Water | 95.0 | 95.0 |
| Reaction product of diethylethanolamine and a polybutenyl-($\overline{M}$n = 950)-substituted succinic anhydride | 0.8 | 0.8 |
| Product of Example 1 | 0.1 | --- |
| Product of Example 3 | --- | 0.15 |

While the invention has been explained in relation to its preferred embodiments, it is to be understood that various modifications thereof will become apparent to those skilled in the art upon reading the specification. Therefore, it is to be understood that the invention disclosed herein is intended to cover such modifications as fall within the scope of the appended claims.

## Claims

1. A sulfurized composition obtainable by reacting a mixture comprising (a) a fatty acid or ester and (b) an olefin having from about 6 to about 30 carbon atoms with sulfur and hydrogen sulfide in the presence of a catalyst and under superatmospheric pressure, wherein the mixture contains from about 10 to about 90 parts by weight of (a) and from about 10 parts to about 80 parts by weight of (b), and wherein from about 10% to about 70% of the sulfur is from hydrogen sulfide.

2. The composition of claim 1 wherein the sulfurized product contains from about 8% to about 15% sulfur, and has a neat ASTM color of less than about 4.5.

3. A composition of claim 1 comprising a hydrocarbyl sulfide, wherein from about 20% to about 90% of the hydrocarbyl groups are derived from a fatty acid or ester and from about 10% to about 80% of the hydrocarbyl groups are derived from an olefin having from about 6 to about 30 carbon atoms, wherein the hydrocarbyl sulfide contains from about 8% to about 15% sulfur, and has a neat ASTM color of less than about 4.5.

4. A process for preparing a sulfurized composition comprising reacting a mixture comprising (a) a fatty acid or ester and (b) an olefin having from about 6 to about 30 carbon atoms with sulfur and hydrogen sulfide in the presence of a catalyst and under superatmospheric pressure, wherein the mixture contains from about 10 to about 90 parts by weight of (a) and from about 10 parts to about 80 parts by weight of (b), and wherein from about 10% to about 70% of the sulfur is from hydrogen sulfide.

5. The process of claim 4 wherein the catalyst is selected from the group consisting of ammonia, an amine, a dithiocarbamate and a transition metal oxide, and wherein the fatty ester is a fatty triglyceride and the olefin contains from about 10 to about 24 carbon atoms.

6. The process of claim 4 wherein the catalyst is a monoalkylamine or a trialkylamine.

7. The use of the sulfurized composition of any one of claims 1 to 3 as an additive in an oil of lubricating viscosity, a gear oil, a metal working fluid, a grease or an aqueous functional fluid.

8. A lubricating composition comprising a major amount of an oil of lubricating viscosity and the sulfurized composition of any one of claims 1 to 3, and optionally a phosphorus or boron antiwear or extreme pressure agent.

17

9. The composition of claim 8 wherein the lubricating composition is a gear oil, or a metal working fluid.

10. A grease comprising an oil of lubricating viscosity, a thickening agent, and the sulfurized composition of any one of claims 1 to 3.

11. An aqueous functional fluid comprising water, a surfactant, and the sulfurized composition of any one of claims 1 to 3.